# EUROPEAN PATENT APPLICATION

(11) **EP 4 745 638 A1**
(43) Date of publication of application: **20.05.2026**
(21) Application number: 24839471.0
(22) Date of filing: 21.06.2024
(51) Int. Cl.: G02B 6/36, G02B 6/40

(54) **OPTICAL CONNECTOR AND FERRULE**

(30) Priority: 12.07.2023 JP 2023114788
(71) Applicant: Fujikura Ltd., Tokyo 135-8512 (JP)
(72) Inventor: YAMANAKA Kouta, Sakura-shi, Chiba 285-8550 (JP)
(74) Representative: Plasseraud IP
(86) International application number: PCT/JP2024/022610
(87) International publication number: WO 2025/013575

(57) **Abstract**

An optical connector includes a plurality of optical fibers, a ferrule including a plurality of fiber holes into which the plurality of optical fibers are inserted, two positioning holes, and a connection end surface on which the plurality of fiber holes and the two positioning holes are open, and a housing that holds the ferrule, in which when viewed from a lateral direction in which the two positioning holes are arranged, the connection end surface is inclined with respect to an imaginary plane perpendicular to a longitudinal direction of the plurality of fiber holes, the housing includes a housing-side contact surface, the ferrule includes a ferrule-side contact surface that comes into contact with the housing-side contact surface to restrict an amount of protrusion of the ferrule from the housing, in a state where the housing-side contact surface and the ferrule-side contact surface are in contact with each other, the ferrule is swingable about a swing center axis with respect to the housing, and the swing center axis is at a position at which the housing-side contact surface and the ferrule-side contact surface are in contact with each other, and extends in an orthogonal direction that is orthogonal to both of the longitudinal direction and the lateral direction.

## Description

### TECHNICAL FIELD

The present invention relates to an optical connector and a ferrule.

Priority is claimed on Japanese Patent Application No. 2023-114788, filed July 12, 2023, the content of which is incorporated herein by reference.

### BACKGROUND ART

Patent Document 1 discloses an optical connector including a ferrule having an inclined connection end surface. By inclining the connection end surface of the optical fiber, a quantity of light reflected at a connection point can be reduced. Since the connection end surface is inclined, in connecting a pair of optical connectors, the ferrule is displaced to slide on the connection end surface of a counterpart side. This displacement amount is taken into consideration to offset the position of the optical fiber on the connection end surface with respect to a positioning pin in advance.

### Citation List

### Patent Document

Patent Document 1: Japanese Unexamined Patent Application, First Publication No. 2019-101232

### SUMMARY OF INVENTION

### Technical Problem

In the optical connector in which the connection end surface is inclined, actual displacement may be smaller than a design displacement amount. In this case, axial deviation occurs between the optical fibers of the pair of optical connectors, and a splice loss of light increases.

The present invention is conceived in view of such circumstances, and an object thereof is to reduce a splice loss of light in a ferrule and an optical connector in which a connection end surface is inclined.

### Solution to Problem

An optical connector according to Aspect 1 of the present invention includes a plurality of optical fibers, a ferrule including a plurality of fiber holes into which the plurality of optical fibers are inserted, two positioning holes, and a connection end surface on which the plurality of fiber holes and the two positioning holes are open, and a housing that holds the ferrule, in which when viewed from a lateral direction in which the two positioning holes are arranged, the connection end surface is inclined with respect to an imaginary plane perpendicular to a longitudinal direction of the plurality of fiber holes, the housing includes a housing-side contact surface, the ferrule includes a ferrule-side contact surface that comes into contact with the housing-side contact surface to restrict an amount of protrusion of the ferrule from the housing, in a state where the housing-side contact surface and the ferrule-side contact surface are in contact with each other, the ferrule is swingable about a swing center axis with respect to the housing, and the swing center axis is at a position at which the housing-side contact surface and the ferrule-side contact surface are in contact with each other, and extends in an orthogonal direction that is orthogonal to both of the longitudinal direction and the lateral direction.

According to Aspect 2 of the present invention, in the optical connector according to Aspect 1, the housing-side contact surface is a curved surface.

A ferrule according to Aspect 3 of the present invention is partially accommodated inside a housing of an optical connector, and includes a plurality of fiber holes into which a plurality of optical fibers are insertable, two positioning holes, a connection end surface on which the two positioning holes and the plurality of fiber holes are open, and a ferrule-side contact surface that comes into contact with the housing to restrict an amount of protrusion of the ferrule from the housing, in which when viewed from a lateral direction in which the two positioning holes are arranged, the connection end surface is inclined with respect to an imaginary plane perpendicular to a longitudinal direction of the plurality of fiber holes, and the ferrule-side contact surface is a curved surface.

According to Aspect 4 of the present invention, in the ferrule according to Aspect 3, the ferrule includes two relief portions that are disposed such that the ferrule-side contact surface is interposed between the two relief portions in the lateral direction, and the two relief portions are recessed to a side opposite to the connection end surface in the longitudinal direction with respect to the ferrule-side contact surface.

According to Aspect 5 of the present invention, in the ferrule according to Aspect 3 or 4, the ferrule includes two ferrule-side contact surfaces including the ferrule-side contact surface, and the two ferrule-side contact surfaces are provided at different positions from each other in an orthogonal direction that is orthogonal to both of the longitudinal direction and the lateral direction.

According to Aspect 6 of the present invention, the ferrule according to any one of Aspects 3 to 5 further includes a protrusion that protrudes in an orthogonal direction that is orthogonal to both of the longitudinal direction and the lateral direction, in which the protrusion includes the ferrule-side contact surface.

### Advantageous Effects of Invention

According to the above aspect of the present invention, a splice loss of light in a ferrule and an optical connector in which a connection end surface is inclined can be reduced.

### BRIEF DESCRIPTION OF DRAWINGS

[FIG. 1] A perspective view of an optical connector according to an embodiment.
[FIG. 2] A view in a direction of arrow II in FIG. 1.
[FIG. 3] A view of the optical connector in FIG. 1 viewed from a distal end side.
[FIG. 4] A perspective view of a ferrule in FIG. 1.
[FIG. 5] A cross-sectional view taken along line V-V in FIG. 1.
[FIG. 6A] A schematic view showing a state of connecting two optical connectors according to the embodiment.
[FIG. 6B] A schematic view showing the state of connecting two optical connectors according to the embodiment.
[FIG. 7A] A view showing a position of a positioning pin of the optical connector on a male side inside a positioning hole of the optical connector on a female side.
[FIG. 7B] A view showing the position of the positioning pin of the optical connector on the male side inside the positioning hole of the optical connector on the female side.
[FIG. 8] A schematic view showing a state where the ferrule swings with respect to a housing in the optical connector of the embodiment.
[FIG. 9] A schematic view of an optical connector according to a first modification example.
[FIG. 10] A schematic view of an optical connector according to a second modification example.
[FIG. 11] A schematic view of an optical connector according to a third modification example.
[FIG. 12] A schematic view of an optical connector according to a fourth modification example.

### DESCRIPTION OF EMBODIMENTS

Hereinafter, an optical connector and a ferrule of the present embodiment will be described based on the drawings.

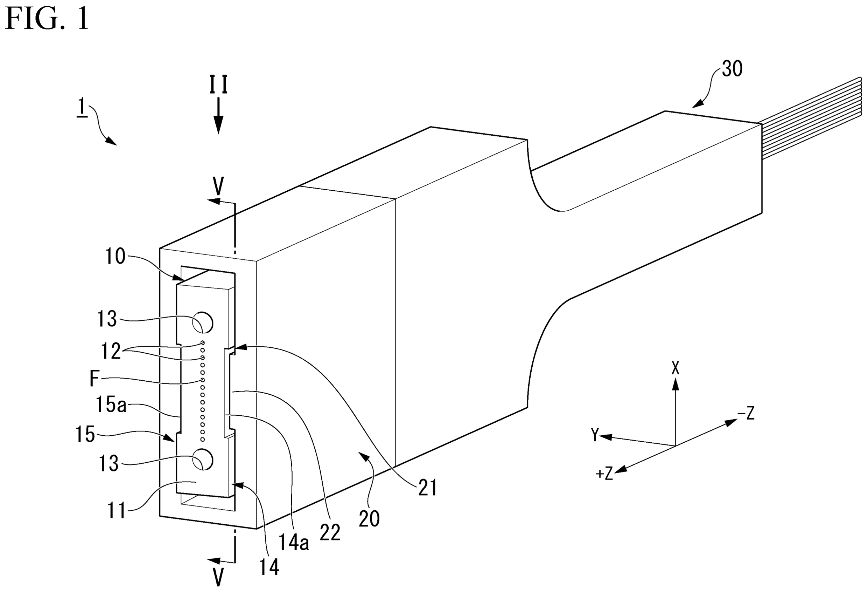

As shown in FIG. 1, an optical connector 1 includes a ferrule 10, a housing 20, a boot 30, and a plurality of optical fibers F. A plurality of fiber holes 12 and two positioning holes 13 are formed in the ferrule 10. The optical fiber F is inserted into each fiber hole 12. The optical fiber F may not be inserted into some of the fiber holes 12. That is, the number of optical fibers F may be smaller than the number of fiber holes 12. The ferrule 10 includes a connection end surface 11. The fiber holes 12 and the positioning holes 13 are open on the connection end surface 11. The housing 20 includes an opening portion 21. A part of the ferrule 10 protrudes to the outside of the housing 20 through the opening portion 21.

### (Definition of Direction)

In the present specification, a direction in which the plurality of fiber holes 12 extend will be referred to as a longitudinal direction Z. A side (a +Z side) closer to the connection end surface 11 in the longitudinal direction Z will be referred to as a distal end side. A side (a -Z side) opposite to the distal end side will be referred to as a proximal end side. A direction in which the two positioning holes 13 are arranged will be referred to as a lateral direction X. A direction orthogonal to both of the longitudinal direction Z and the lateral direction X will be referred to as an orthogonal direction Y.

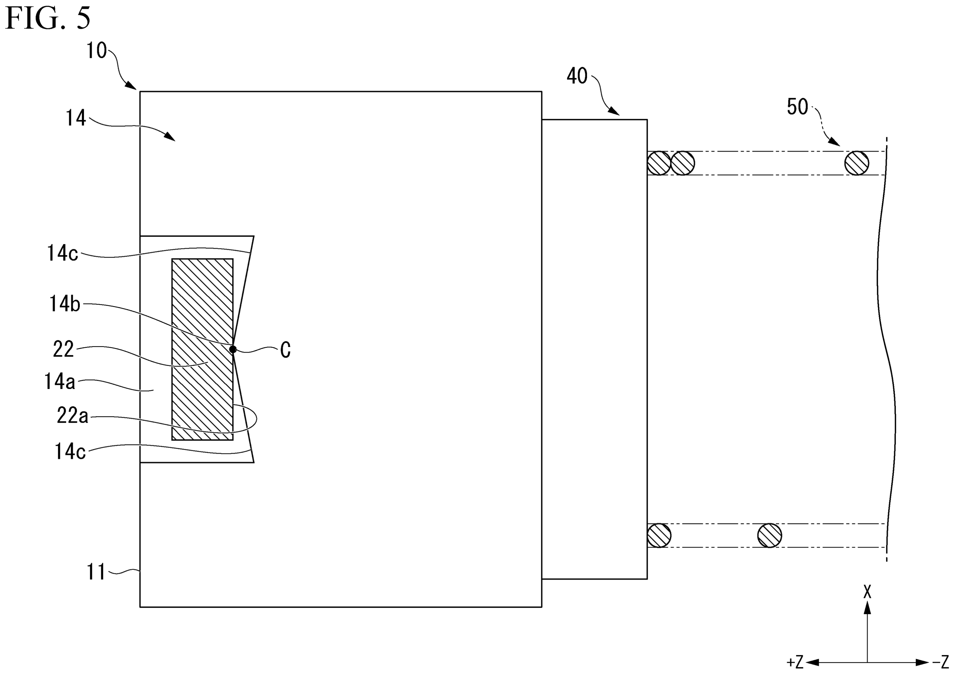

A part of the ferrule 10 is held inside the housing 20. A distal end portion (an end portion on the +Z side) of the ferrule 10 protrudes from the housing 20. A pin clamp 40, a biasing member 50 (see FIG. 5), and the like are accommodated inside the housing 20. The biasing member 50 biases the ferrule 10 to a side closer to the connection end surface 11, which is the distal end side. For example, a coil spring may be adopted as the biasing member 50. The pin clamp 40 is disposed between the biasing member 50 and the ferrule 10. A biasing force of the biasing member 50 is transmitted to the ferrule 10 via the pin clamp 40. The biasing member 50 may be in direct contact with the ferrule 10 by not disposing the pin clamp 40.

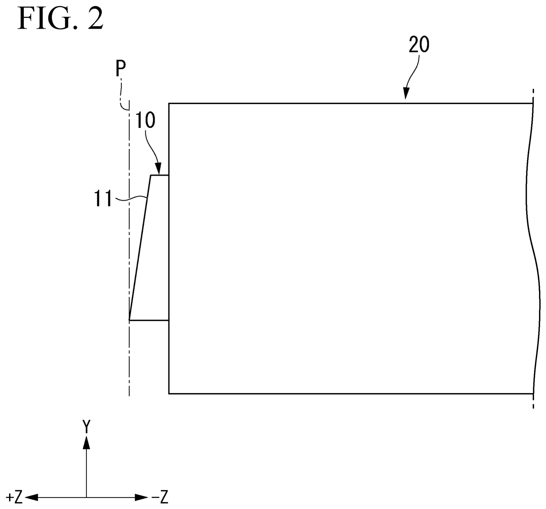

FIG. 2 is a view of the distal end portion of the optical connector 1 viewed in the lateral direction X. An imaginary plane P shown in FIG. 2 is a plane orthogonal to the longitudinal direction Z. When viewed from the lateral direction X, the connection end surface 11 is inclined with respect to the imaginary plane P. An angle between the connection end surface 11 and the imaginary plane P is, for example, 8°. This angle can be changed. By inclining the connection end surface 11 of the ferrule 10, an effect of reducing occurrence of Fresnel reflection in a case where the two optical connectors 1 are connected can be achieved.

In a state after the ferrule 10 is molded by injection molding, a part or the whole of the connection end surface 11 may not be inclined with respect to the imaginary plane P. After molding, the connection end surface 11 may be inclined with respect to the imaginary plane P by polishing the connection end surface 11. During polishing, the optical fiber F may be caused to protrude from the fiber hole 12 and the connection end surface 11 may be polished together with the optical fiber F.

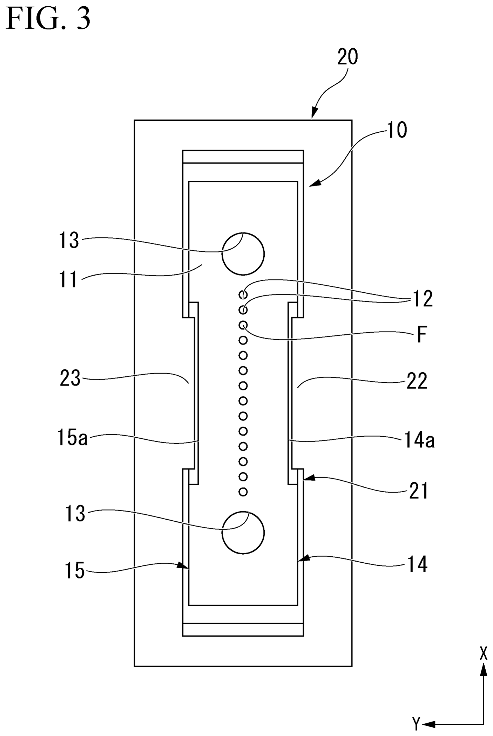

As shown in FIG. 3, a total of 12 fiber holes 12 are formed in the ferrule 10 of the present embodiment. These fiber holes 12 are disposed in one row. That is, one row (hereinafter, referred to as a fiber row) including 12 fiber holes 12 is disposed. The fiber holes 12 included in the fiber row are disposed to be arranged in the lateral direction X. The number of fiber rows formed in the ferrule 10 may be two or more. The number of fiber holes 12 included in one fiber row may be changed.

As shown in FIG. 3, the housing 20 includes a first regulation portion 22 and a second regulation portion 23. The first regulation portion 22 and the second regulation portion 23 protrude to the inside of the opening portion 21. The first regulation portion 22 and the second regulation portion 23 are disposed such that the ferrule 10 is interposed therebetween. The first regulation portion 22 and the second regulation portion 23 restrict the ferrule 10 from falling off from the housing 20 to the distal end side.

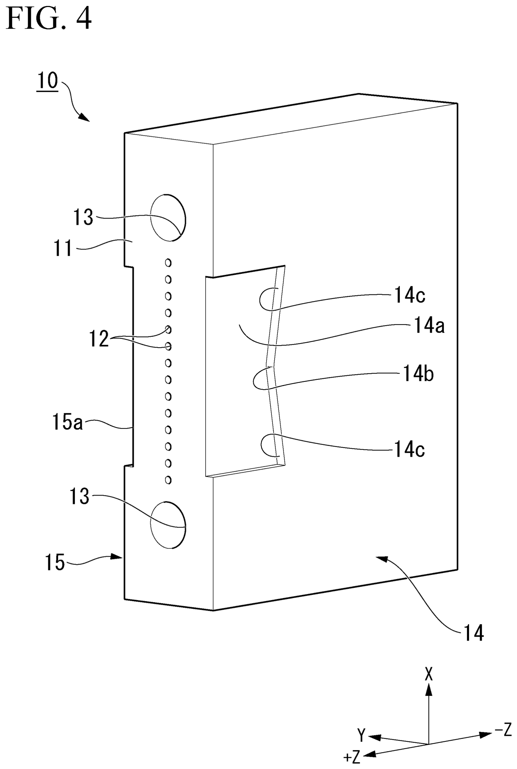

As shown in FIG. 4, the ferrule 10 includes a first end surface 14 and a second end surface 15 that face in the orthogonal direction Y. A first recessed portion 14a is formed on the first end surface 14, and a second recessed portion 15a is formed on the second end surface 15. A ferrule-side contact surface 14b and two relief portions 14c are formed on an inner wall of the first recessed portion 14a. The ferrule-side contact surface 14b faces the distal end side (the +Z side). As shown in FIG. 5, the first regulation portion 22 enters the inside of the first recessed portion 14a. The first regulation portion 22 includes a housing-side contact surface 22a that comes into contact with the ferrule-side contact surface 14b.

As shown in FIG. 5, the biasing force of the biasing member 50 pushes the ferrule-side contact surface 14b against the housing-side contact surface 22a. By bringing the ferrule-side contact surface 14b and the housing-side contact surface 22a into contact with each other, an amount of protrusion of the ferrule 10 with respect to the housing 20 is determined. In the present embodiment, the ferrule-side contact surface 14b is a curved surface that protrudes to the distal end side (the +Z side). Thus, the ferrule 10 can swing with respect to the housing 20 in a state where the ferrule-side contact surface 14b and the housing-side contact surface 22a are in contact with each other. A center axis (hereinafter, referred to as a swing center axis C) of this swing is at a position at which the ferrule-side contact surface 14b and the housing-side contact surface 22a are in contact with each other. The swing center axis C extends in the orthogonal direction Y. In a case where the ferrule 10 swings, an angle of the connection end surface 11 with respect to the lateral direction X changes. A mechanism that causes the ferrule 10 to swing will be referred to as a "swing mechanism".

The two relief portions 14c are connected to both ends of the ferrule-side contact surface 14b in the lateral direction X. The two relief portions 14c are recessed to the proximal end side (the -Z side) with respect to the ferrule-side contact surface 14b. By forming the relief portions 14c, the swing of the ferrule 10 with respect to the housing 20 occurs more easily. Accordingly, a splice loss of light in a case where connection between the optical connectors 1 is made a plurality of times is stabilized.

As shown in FIG. 3, the second regulation portion 23 enters the second recessed portion 15a. While not shown, the second regulation portion 23 includes a second housing-side contact surface, and the second recessed portion 15a includes a second ferrule-side contact surface. In other words, the ferrule 10 includes two ferrule-side contact surfaces, and the housing 20 includes two housing-side contact surfaces. The two ferrule-side contact surfaces are disposed at different positions from each other in the orthogonal direction Y. The second recessed portion 15a may also include two relief portions like the first recessed portion 14a.

Next, action of the optical connector 1 and the ferrule 10 configured as described above will be described.

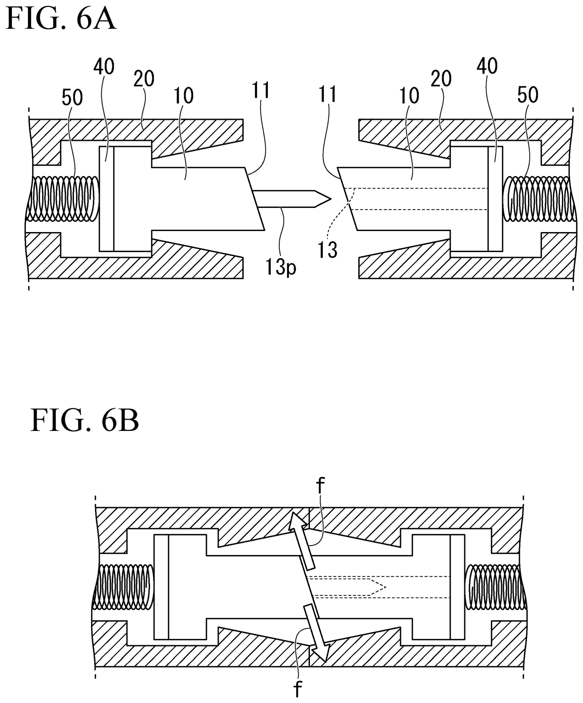

FIGS. 6A and 6B are schematic views in connecting two optical connectors 1. One of the two optical connectors 1 is a male side, and the other is a female side. The optical connector 1 on the male side includes two positioning pins 13p. Each of the positioning pins 13p passes through the two positioning holes 13 included in the ferrule 10 on the male side and is held by the pin clamp 40. By inserting the positioning pin 13p on the male side into the positioning hole 13 on the female side, the two optical connectors 1 are positioned.

Here, the connection end surface 11 in the present embodiment is inclined. Thus, in a case where the connection end surfaces 11 of the two optical connectors 1 are brought into contact with each other, a component force f shown by an arrow in FIG. 6B is generated. The component force f acts in a direction in which the ferrule 10 is moved in the orthogonal direction Y. Here, an outer diameter of the positioning pin 13p is smaller than an inner diameter of the positioning hole 13. In other words, a gap is present between the positioning pin 13p and the positioning hole 13. This gap is provided for the purpose of easily inserting the positioning pin 13p into the positioning hole 13.

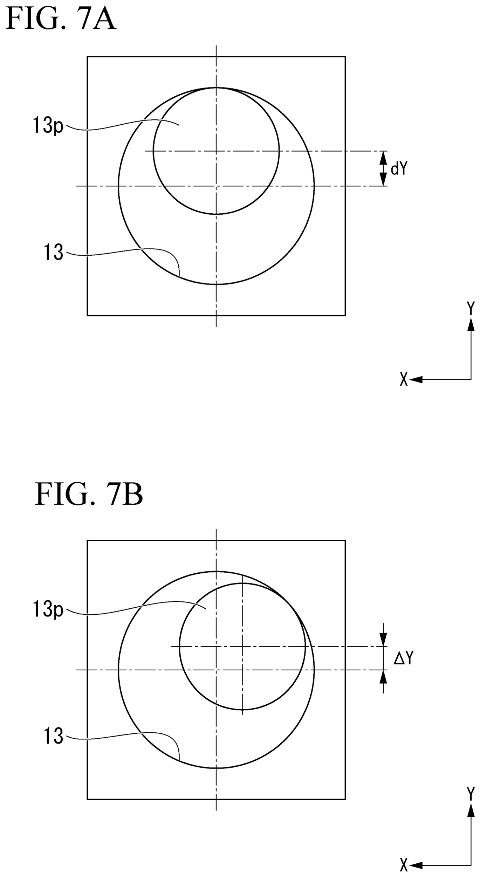

FIGS. 7A and 7B show an example of a position of the positioning pin 13p on the male side inside the positioning hole 13 on the female side. FIG. 7A shows an ideal state, and FIG. 7B shows a non-ideal state. In FIGS. 7A and 7B, a size of the gap between the positioning pin 13p and the positioning hole 13 is shown in an exaggerated manner for easy understanding. As shown in FIG. 7A, in the ideal state, a center of the positioning pin 13p and a center of the positioning hole 13 on the female side are positioned to match in the lateral direction X. A distance between the center of the positioning pin 13p and the center of the positioning hole 13 in this state will be referred to as a design displacement amount dY. The design displacement amount dY is taken into consideration to determine the dimensions of the ferrule 10 such that the fiber holes 12 of the two optical connectors 1 are appropriately positioned with each other. A specific example of "the dimension" is a distance of each fiber hole 12 with respect to the positioning hole 13 in the orthogonal direction Y.

In connecting the two optical connectors 1, the optical connectors 1 may be in inclined postures with respect to each other. In this case, as shown in FIG. 7B, the center of the positioning pin 13p on the male side may deviate in the lateral direction X from the center of the positioning hole 13 on the female side. A degree of deviation in the orthogonal direction Y between the center of the positioning pin 13p and the center of the positioning hole 13 in this state will be referred to as an actual displacement amount ΔY. In a case where the actual displacement amount ΔY is different from the design displacement amount dY, positions of the fiber holes 12 of the two optical connectors 1 deviate from each other. This results in an increase in the splice loss of light.

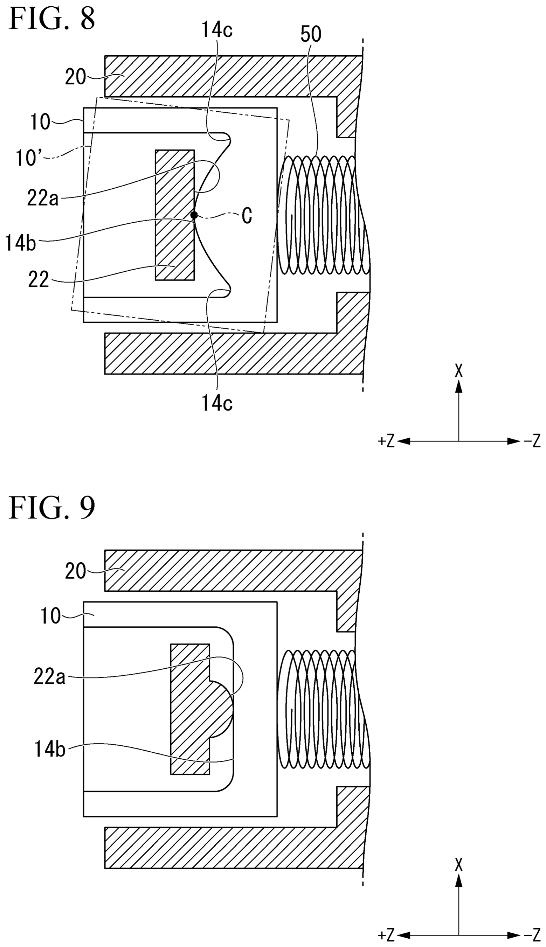

In the optical connector 1 of the present embodiment, the ferrule 10 is configured to be swingable with respect to the housing 20 in a state where the ferrule-side contact surface 14b and the housing-side contact surface 22a are in contact with each other. Specifically, as shown in FIG. 8, the ferrule 10 swings about the swing center axis C. In FIG. 8, a posture of the ferrule 10 after the swing is denoted by reference sign 10'. While FIG. 8 does not show the pin clamp 40, the ferrule 10 can swing regardless of whether or not the pin clamp 40 is present. By causing the ferrule 10 to be swingable, even in a case where the state shown in FIG. 7B temporarily occurs in connecting the two optical connectors 1, fixing of the posture of the ferrule 10 in this state is restricted. That is, a transition can be made from the state shown in FIG. 7B to the state in FIG. 7A.

A mechanism of the above transition will be described in more detail. In a case where at least one of the ferrule-side contact surface 14b or the housing-side contact surface 22a is a curved surface, the ferrule 10 can swing as shown in FIG. 8. In other words, in a case where both of the ferrule-side contact surface 14b and the housing-side contact surface 22a are flat surfaces, the posture of the ferrule 10 is constrained by contact between the two flat surfaces. More specifically, since a force applied in the lateral direction X cannot be released, the ferrule 10 cannot deviate in the orthogonal direction Y in which the connection end surface 11 is inclined. In such a constrained state, once the posture of the ferrule 10 is brought into the state in FIG. 7B, the posture of the ferrule 10 is unlikely to change any further.

Meanwhile, by causing the ferrule 10 to be swingable with respect to the housing 20, the constraining of the posture of the ferrule 10 is lessened. In connecting the two optical connectors 1, the component force f (see FIG. 6B) generated by the inclination of the connection end surface 11 acts to bring the ferrule 10 into the state in FIG. 7A. That is, because of the presence of the "swing mechanism", the action of the component force f is more reliably exhibited, and the actual displacement amount ΔY can be brought closer to the design displacement amount dY. Therefore, the deviation amount between the fiber holes 12 of the pair of optical connectors 1 is reduced. Accordingly, the splice loss of light can be reduced.

In the present embodiment, the ferrule-side contact surface 14b is a curved surface. However, the ferrule-side contact surface 14b may be a flat surface. In this case, the ferrule 10 is swingable with respect to the housing 20 in a case where the housing-side contact surface 22a is a curved surface. In a case where the housing 20 is swingable, an effect of reducing the splice loss of light can be achieved.

As described above, the optical connector 1 of the present embodiment includes the plurality of optical fibers F, the ferrule 10, and the housing 20 holding the ferrule 10. The housing 20 includes the housing-side contact surface 22a. The ferrule 10 includes the ferrule-side contact surface 14b that comes into contact with the housing-side contact surface 22a to restrict the amount of protrusion of the ferrule 10 from the housing 20. In a state where the housing-side contact surface 22a and the ferrule-side contact surface 14b are in contact with each other, the ferrule 10 is swingable about the swing center axis C with respect to the housing 20. The swing center axis C is at a position at which the housing-side contact surface 22a and the ferrule-side contact surface 14b are in contact with each other, and extends in the orthogonal direction Y orthogonal to both of the longitudinal direction Z and the lateral direction X.

The ferrule 10 of the present embodiment is partially accommodated inside the housing 20 of the optical connector 1. The ferrule 10 includes the plurality of fiber holes 12 into which the plurality of optical fibers F are insertable, the two positioning holes 13, the connection end surface 11 on which the two positioning holes 13 and the plurality of fiber holes 12 are open, and the ferrule-side contact surface 14b that comes into contact with the housing 20 to restrict the amount of protrusion of the ferrule 10 from the housing 20. When viewed from the lateral direction X in which the two positioning holes 13 are arranged, the connection end surface 11 is inclined with respect to the imaginary plane P (see FIG. 2) perpendicular to the longitudinal direction Z of the plurality of fiber holes 12. The ferrule-side contact surface 14b is a curved surface.

According to the optical connector 1 or the ferrule 10 having the above configuration, the splice loss of light can be reduced.

The ferrule 10 may include the two relief portions 14c that are disposed such that the ferrule-side contact surface 14b is interposed between the two relief portions 14c in the lateral direction X. The two relief portions 14c may be recessed to a side (the -Z side) opposite to the connection end surface 11 in the longitudinal direction Z with respect to the ferrule-side contact surface 14b. In this case, when the ferrule 10 swings with respect to the housing 20, a part of the housing-side contact surface 22a can enter the relief portion 14c. Accordingly, the ferrule 10 is more likely to swing with respect to the housing 20.

The ferrule 10 may include two ferrule-side contact surfaces including the ferrule-side contact surface 14b. The two ferrule-side contact surfaces may be provided at different positions from each other in the orthogonal direction Y. By bringing the two ferrule-side contact surfaces into contact with the housing 20 at different positions in the orthogonal direction Y, the posture of the ferrule 10 can be stabilized.

The technical scope of the present invention is not limited to the embodiment, and various modifications can be made without departing from the spirit of the present invention.

Modification examples of the present embodiment will be described with reference to FIGS. 9 to 12. FIGS. 9 to 12 do not show the pin clamp 40. The pin clamp 40 may not be provided.

In the example in FIG. 9, the ferrule-side contact surface 14b is a flat surface, and the housing-side contact surface 22a is a curved surface. Even in this case, the ferrule 10 can swing with respect to the housing 20. That is, in a case where one of the ferrule-side contact surface 14b or the housing-side contact surface 22a is a curved surface, the ferrule 10 is swingable.

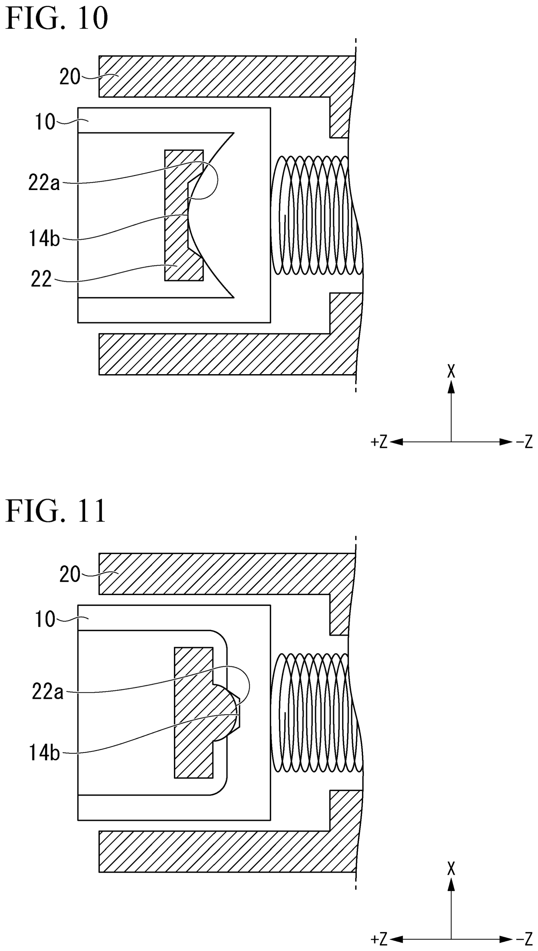

In the example in FIG. 10, a recessed portion that is recessed to the distal end side (the +Z side) is formed in the first regulation portion 22. The inside of the recessed portion is the housing-side contact surface 22a.

In the example in FIG. 11, a recessed portion that is recessed to the proximal end side (the -Z side) is formed in the ferrule 10. The inside of the recessed portion is the ferrule-side contact surface 14b.

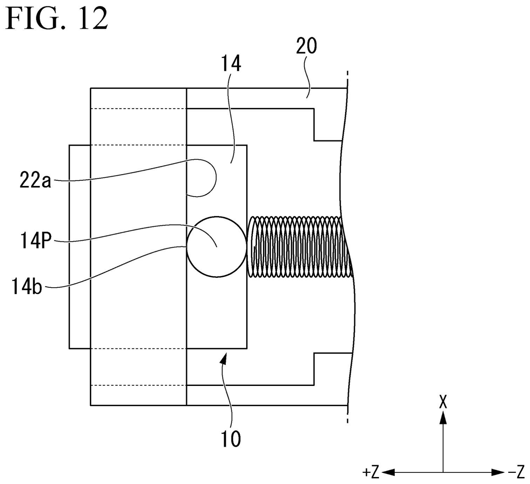

In the example in FIG. 12, a protrusion 14P is formed in the ferrule 10. The protrusion 14P protrudes to the outside in the orthogonal direction Y from the first end surface 14 of the ferrule 10. An outer peripheral surface of the protrusion 14P is the ferrule-side contact surface 14b.

In any of the modification examples shown in FIGS. 9 to 12, the same effects as the embodiment can be achieved. FIGS. 9 to 12 show a structure of the ferrule 10 on a side of the first end surface 14. The same structure may be provided on a side of the second end surface 15. For example, the ferrule 10 in the example in FIG. 12 may include a second protrusion that protrudes to the outside in the orthogonal direction Y from the second end surface 15, in addition to the protrusion 14P. An outer peripheral surface of the second protrusion may be a ferrule-side contact surface. In other words, the ferrule 10 may include two protrusions, and each outer peripheral surface of the two protrusions may be a ferrule-side contact surface.

Constituents in the above embodiment can be replaced with well-known constituents, as appropriate, without departing from the spirit of the present invention. In addition, the above embodiment and the modification examples may be combined, as appropriate.

### REFERENCE SIGNS LIST

1 Optical connector
10 Ferrule
11 Connection end surface
12 Fiber hole
13 Positioning hole
14b Ferrule-side contact surface
14c Relief portion
14P Protrusion
20 Housing
22a Housing-side contact surface
C Swing center axis
F Optical fiber
P Imaginary plane
X Lateral direction
Y Orthogonal direction
Z Longitudinal direction

## Claims

1. An optical connector comprising:
a plurality of optical fibers;
a ferrule including a plurality of fiber holes into which the plurality of optical fibers are inserted, two positioning holes, and a connection end surface on which the plurality of fiber holes and the two positioning holes are open; and
a housing that holds the ferrule,
wherein when viewed from a lateral direction in which the two positioning holes are arranged, the connection end surface is inclined with respect to an imaginary plane perpendicular to a longitudinal direction of the plurality of fiber holes,
the housing includes a housing-side contact surface,
the ferrule includes a ferrule-side contact surface that comes into contact with the housing-side contact surface to restrict an amount of protrusion of the ferrule from the housing,
in a state where the housing-side contact surface and the ferrule-side contact surface are in contact with each other, the ferrule is swingable about a swing center axis with respect to the housing, and
the swing center axis is at a position at which the housing-side contact surface and the ferrule-side contact surface are in contact with each other, and extends in an orthogonal direction that is orthogonal to both of the longitudinal direction and the lateral direction.

2. The optical connector according to Claim 1,
wherein the housing-side contact surface is a curved surface.

3. A ferrule that is partially accommodated inside a housing of an optical connector, the ferrule comprising:
a plurality of fiber holes into which a plurality of optical fibers are insertable;
two positioning holes;
a connection end surface on which the two positioning holes and the plurality of fiber holes are open; and
a ferrule-side contact surface that comes into contact with the housing to restrict an amount of protrusion of the ferrule from the housing,
wherein when viewed from a lateral direction in which the two positioning holes are arranged, the connection end surface is inclined with respect to an imaginary plane perpendicular to a longitudinal direction of the plurality of fiber holes, and
the ferrule-side contact surface is a curved surface.

4. The ferrule according to Claim 3,
wherein the ferrule includes two relief portions that are disposed such that the ferrule-side contact surface is interposed between the two relief portions in the lateral direction, and
the two relief portions are recessed to a side opposite to the connection end surface in the longitudinal direction with respect to the ferrule-side contact surface.

5. The ferrule according to Claim 3 or 4,
wherein the ferrule includes two ferrule-side contact surfaces including the ferrule-side contact surface, and
the two ferrule-side contact surfaces are provided at different positions from each other in an orthogonal direction that is orthogonal to both of the longitudinal direction and the lateral direction.

6. The ferrule according to any one of Claims 3 to 5, further comprising:
a protrusion that protrudes in an orthogonal direction that is orthogonal to both of the longitudinal direction and the lateral direction,
wherein the protrusion includes the ferrule-side contact surface.
